# EUROPÄISCHE PATENTANMELDUNG

(11) **EP 3 757 691 A1**
(43) Veröffentlichungstag der Anmeldung: **30.12.2020**
(21) Anmeldenummer: 19182567.8
(22) Anmeldetag: 26.06.2019
(51) Int. Cl.: G05B 19/042, G06F 1/16, G06F 9/455, G06F 9/50

(54) **AUTOMATISIERUNGSGERÄT**

(71) Anmelder: Siemens Aktiengesellschaft, 80333 München (DE)
(72) Erfinder: Steindl, Günter, 92284 Poppenricht (DE)

(57) **Zusammenfassung**

Die Erfindung umfasst ein Automatisierungsgerät (1) für die industrielle Automatisierung, ein Mehrkernprozessorsystem (10) mit mehreren Rechenkernen (11, ..., 18), einen Programmspeicher (2), eine Kommunikationsschnittstelle (), welche auf einer ersten Seite (3a) ausgestaltet ist, eine lösbare Verbindung mit einem Funkmodul (4) einzugehen und auf einer zweiten Seite (3b) mit einem Zuweisungsmittel (5) in Verbindung steht, wobei das Mehrkernprozessorsystem (10) und der Programmspeicher (2) ausgestaltet sind, mit einem ersten Anteil (C1) an Rechenkernen (11, ...,14) und einem Steuerungsprogramm (20) eine industrielle Anlage zu steuern, wobei das Zuweisungsmittel (5) ausgestaltet ist, eine Dienstanfrage (R) von einem externen Gerät (30) zu verwalten, wobei die Dienstanfrage über das Funkmodul (4) an das Zuweisungsmittel (5) gestellt wird, weiterhin ist das Zuweisungsmittel (5) ausgestaltet, einem Dienst (S) der Dienstanfrage (R) einen isolierten Bereich (SB) bereitzustellen, innerhalb dessen jegliche Aktionen des Dienstes (S) keine Auswirkung auf die Abläufe in dem Steuerungsprogramm (20) hat, wobei der isolierte Bereich (SB) einen zweiten Anteil (C2) an Rechenkernen (15,..., 18) umfasst, weiterhin ist das Zuweisungsmittel (5) ausgestaltet, eine Kommunikationsverbindung (31) zu dem externen Gerät (30) aufrecht zu halten und eine in dem zweiten Anteil (C2) von Rechenkernen (15,..., 18) erbrachte Dienstleistung (S1) des Dienstes (S) dem externen Gerät (30) zur Verfügung zu stellen.

## Beschreibung

Die Erfindung betrifft ein Automatisierungsgerät für die industrielle Automatisierung umfassend ein Mehrkernprozessorsystem mit mehreren Rechenkernen, einen Programmspeicher, eine Kommunikationsschnittstelle, welche auf einer ersten Seite ausgestaltet ist, eine lösbare Verbindung mit einem Funkmodul einzugehen und auf einer zweiten Seite mit einem Zuweisungsmittel in Verbindung steht, wobei das Mehrkernprozessorsystem und der Programmspeicher ausgestaltet sind, mit einem ersten Anteil an Rechenkernen und einem Steuerungsprogramm eine industrielle Anlage zu steuern.

In der Automatisierungstechnik gibt es eine Vielzahl von Aufgaben die mit speziellen, nur mit einer Aufgabe zugehörigen Hardware gelöst werden. Heute werden dementsprechend noch viele einzelne Varianten an Steuerungsmodulen mit dedizierten Aufgaben eingesetzt, welches zusätzlichen Einbauplatz, Verkabelungsaufwand und statistisch eine höhere Ausfallwahrscheinlichkeit bedeutet.

Es ist Aufgabe der vorliegenden Erfindung zukünftig mit weniger Varianten von Steuerungsmodulen und weniger Verkabelungsaufwand auszukommen.

Die Aufgabe wird für das eingangs genannte Automatisierungsgerät dadurch gelöst, dass das Zuweisungsmittel ausgestaltet ist, eine Dienstanfrage von einem externen Gerät zu verwalten, wobei die Dienstanfrage über das Funkmodul an das Zuweisungsmittel gestellt wird, weiterhin ist das Zuweisungsmittel ausgestaltet, einem Dienst der Dienstanfrage einen isolierten Bereich bereitzustellen, innerhalb dessen jegliche Aktion des Dienstes keine Auswirkung auf die Abläufe in dem Steuerungsprogramm hat, wobei der isolierte Bereich einen zweiten Anteil an Rechenkernen umfasst, weiterhin ist das Zuweisungsmittel ausgestaltet, eine Kommunikationsverbindung zu dem externen Gerät aufrecht zu halten und eine in dem zweiten Anteil von Rechenkernen erbrachte Dienstleistung des Dienstes dem externen Gerät zur Verfügung zu stellen.

Durch die schnell fortschreitende Entwicklung bei den Systems on Chips (SoC) - egal ob ARM oder INTEL basiert - werden dort immer mehr Rechenkerne zusammen mit einer passenden Onchip Peripherie verfügbar. Eine Verlustleistung sinkt ebenfalls, so dass sich diese Chips für den Einsatz in der industriellen Automatisierung eignen und dort auch Verwendung finden. Damit wird es für beliebige Automatisierungsmodule möglich, neben ihrem zugeordneten origineren Aufgaben eine zusätzliche Aufgabe für einen zusätzlichen Dienst als Gastgeber zu lösen. Mit Hilfe von Kapselungsfunktionen, wie Virtualisierung, Memory encryption, USB Authentification, Interface Assignment, memory bandwidth limitation and Core assignment, lässt sich der zusätzliche Dienst als Gast auch Rückwirkungsfrei und sicher in einem isolierten Bereich halten.

Eine weitere Ausgestaltung des Automatisierungsgerätes sieht vor, dass das Zuweisungsmittel weiterhin ausgestaltet ist, eine abstrahierende Schicht zwischen der vorhandenen Hardware mit einem bereits installierten Betriebssystem und einem weiteren, für den Dienst zu installierendes, Gast-Betriebssystem zu bilden. Derartige Systeme erlauben es dann, eine virtuelle Umgebung (Hardwareressourcen, insbesondere CPU, Speicher, Festplattenplatz, verfügbare Peripherie) zu definieren, die dann unabhängig von der tatsächlich vorhandenen Hardware als Basis für die Installation eines Gast-Betriebssystems dient.

Insbesondere für ein Automatisierungsgerät ist es von Vorteil, wenn die Kommunikationsschnittstelle als eine USB-Schnittstelle ausgestaltet ist, welche allen Umständen mechanischer Belastungen und EMV-Anforderungen im industriellen Umfeld Stand hält. Dass bedeutet eine derartige USB-Schnittstelle muss EMV-fest, rüttelfest und Staub- und Feuchtigkeits-geschützt sein zusätzlich können die elektrischen Kontakte mit Gold überzogen sein, damit immer eine sichere Verbindung besteht. Die USB-Schnittstelle ist besonders gut geeignet, da sie neben den Daten auch noch die Energieversorgung des Funkmoduls sicherstellt.

Eine weitere Ausgestaltung sieht an dem Automatisierungsgerät einen Einsteck-Schacht vor, in welchem das Funkmodul eingesteckt wird, wobei der Einsteck-Schacht eine Öffnung und einen Bodenbereich aufweist, wobei die Öffnung mit einem Dichtungselement versehen ist, welche bei eingestecktem Funkmodul den Einsteck-Schacht abdichtet und der Bodenbereich eine USB-Buchse aufweist.

Um, insbesondere Rüttelanforderungen und zusätzlichen Vibrationen, welche auf das Automatisierungsgerät wirken, gerecht zu werden, weist das Automatisierungsgerät ein Fixierungselement auf, welches das Funkmodul in dem Einsteck-Schacht fixiert.

Vorzugsweise ist das Automatisierungsgerät ausgestaltet als ein HMI-Gerät, eine speicherprogrammierbare Steuerung, ein dezentrales Peripheriesystem oder ein Mehrzweckcomputer mit einer installierten SPS-Software.

Im Hinblick auf eine Datensicherheit weist das Automatisierungsgerät zusätzlich ein Authentifizierungsmittel auf, welches ausgestaltet ist, nach einem Verbinden mit dem Funkmodul eine Authentifizierung des Funkmoduls vorzunehmen und erst dann für einen Betrieb freizuschalten, wenn die Authentifizierung positiv war.

Mit der Zeichnung werden Ausführungsbeispiele der Erfindung vorgestellt. Es zeigt:
- FIG 1: ein Automatisierungsgerät, welches eine Funkverbindung mit einem externen Gerät hergestellt hat,
- FIG 2: das erfindungsgemäße Automatisierungsgerät mit einem Einsteck-Schacht für ein Funkmodul und
- FIG 3: eine Ansammlung von Automatisierungsgeräten, welche über ein öffentliches Funknetz miteinander kommunizieren.

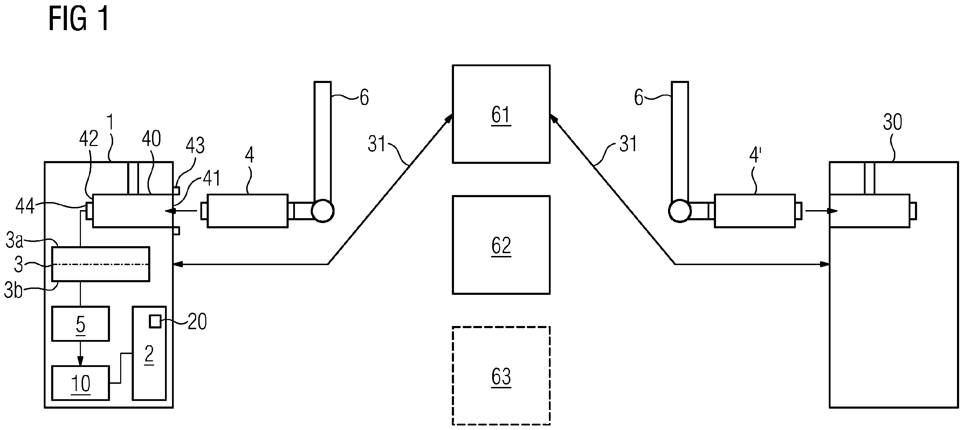

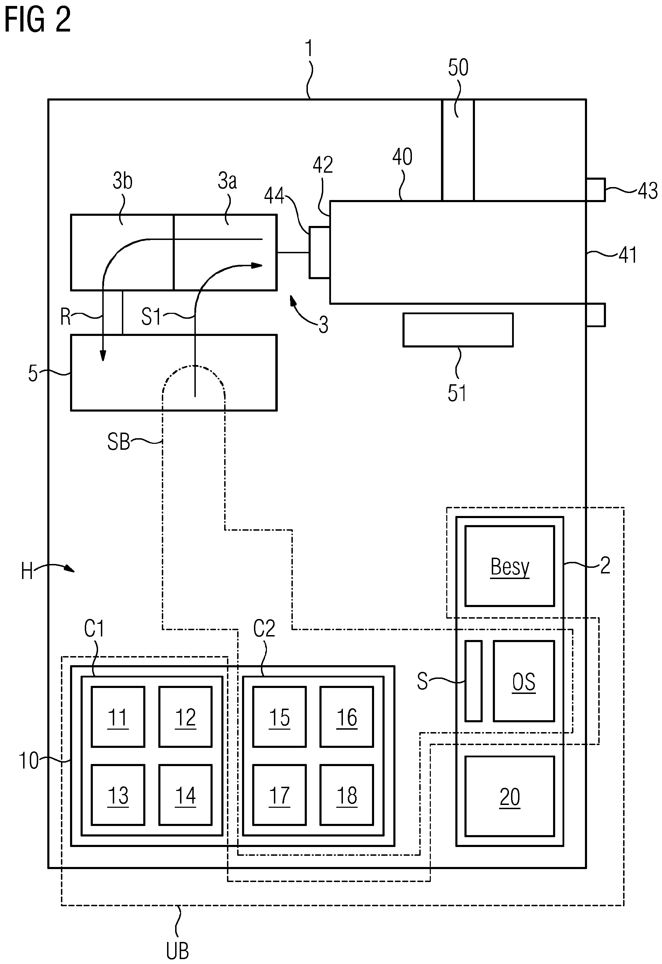

Gemäß FIG 1 ist ein Automatisierungsgerät 1 für die industrielle Automatisierung dargestellt. Ein Mehrkernprozessorsystem 10 mit mehreren Rechenkernen 11,...,18 (siehe auch FIG 2) steht mit einem Programmspeicher 2 in Verbindung. Als herkömmliches Automatisierungsgerät 1 läuft in dem Programmspeicher 2 unter Zuhilfenahme des Mehrkernprozessors 10 ein Steuerungsprogramm 20 zur Automatisierung eines industriellen Prozesses ab.

Das Automatisierungsgerät 1 kann mit Hilfe eines eingesteckten Funkmoduls 4 über eine erste Übertragungseinrichtung 61, eine zweite Übertragungseinrichtung 62 oder eine dritte Übertragungseinrichtung 63, eine Funkverbindung, nämlich insbesondere eine Kommunikationsverbindung 31 zu einem externen Gerät 30, welches ebenfalls mit einem weiteren eingesteckten Funkmodul 4' versehen ist, aufnehmen.

Die erste Übertragungseinrichtung 61 kann beispielsweise als eine Base Station nach dem 5G Standard ausgestaltet sein. Die zweite Übertragungseinrichtung 62 kann beispielsweise als eine WIFI Base Station ausgestaltet sein und die dritte Übertragungseinrichtung 63 ist beispielsweise ein Bluetooth Verbindungslink.

Das Automatisierungsgerät 1 weist einen Einsteckschacht 40 auf, in welchem das Funkmodul 4 eingesteckt werden kann. Das Funkmodul 4 weist dazu einen USB Stecker auf. Der Einsteck-Schacht 40 weist eine Öffnung 41 und einen Bodenbereich 42 auf, wobei die Öffnung 41 mit einem Dichtungselement 43 versehen ist, welche bei eingestecktem Funkmodul 4 den Einsteck-Schacht 40 abdichtet und der Bodenbereich 42 weist eine USB-Buchse 44 auf. Mit großem Vorteil kann man nun aus einem Automatisierungsgerät mit einem USB-Funkmodul, welches durch den Anwender gesteckt wird, ein Automatisierungsmodul mit einer Funkverbindung herstellen. Als Hersteller dieses Automatisierungsmoduls ist es nicht mehr notwendig, für die Funkverbindung eine Zertifizierung zu erhalten. Durch die bereits weiter oben genannte Hardwareentwicklung ist dieses Feature der Funkerweiterung von einer einfachen dezentralen Peripherie über eine Einsteiger SPS bis hin zu einer High end SPS genauso verfügbar, wie für Internet auf Things Boxen für Mehrzweck Industrie-PC's. Auch Antriebe oder Motion Controller könnten mit dieser Funktechnik ausgestattet werden.

Mit dem Zuweisungsmittel 5, welches zwischen den Mehrkernprozessorsystem 10 und der Kommunikationsschnittstelle 3 angeordnet ist, ist es dem Automatisierungsgerät 1 nun möglich, mit Hilfe eines aufgenommenen Dienstes S eine zusätzliche Dienstleistung S1 zu erbringen. Die Kommunikationsschnittstelle 3 weist dazu eine erste Seite 3a und eine zweite Seite 3b auf. Die erste Seite 3a ist ausgestaltet, eine lösbare Verbindung mit dem Funkmodul 4 einzugehen und die zweite Seite 3b ist ausgestaltet, mit dem Zuweisungsmittel 5 in Verbindung zu stehen.

Gemäß FIG 2 wird das in FIG 1 bereits vorgestellte Automatisierungsgerät 1 detaillierter beschrieben. Über dem Einsteckschacht 40 kann ein Funkmodul 4 in das Automatisierungsgerät 1 eingesteckt werden. Mittels eines Fixierungselementes 50 kann das Einsteckmodul 40 im Automatisierungsgerät 1 fixiert werden. Bei eingestecktem Funkmodul 4 in das Automatisierungsgerät 1 hilft das Dichtungselement 43 die Dichtigkeit herzustellen. Die Kommunikationsschnittstelle 3 mit ihrer ersten Seite 3a und ihrer zweiten Seite 3b verbindet das Zuweisungsmodul 5 mit einer USB-Buchse 44, welche im Bodenbereich 42 des Einsteck-Schachtes 40 angeordnet ist. Kommt nun mittels einer Funkverbindung über das Funkmodul 4 eine Dienstanfrage R in dem Automatisierungsgerät 1 an, so wird das Zuweisungsmittel 5, für einen Dienst S der Dienstanfrage R einen isolierten Bereich SB bereitstellen, innerhalb dieses isolierten Bereiches SB hat dann jegliche Aktion des Dienstes S keine Auswirkungen auf die Abläufe in dem Steuerungsprogramm 20, welches in einem ersten Anteil C1 an Rechenkernen 11,...,14 abläuft und eine industrielle Anlage steuert. Das Zuweisungsmittel 5 hat sodann für den Dienst S einen zweiten Anteil C2 an Rechenkernen 15,...,18 bereitgestellt und zusätzlich ist das Zuweisungsmittel 5 ausgestaltet, eine Kommunikationsverbindung 31 (siehe FIG 1) zu dem externen Gerät 30 aufrecht zu halten und eine in dem zweiten Anteil C2 von Rechenkernen 15,...,18 erbrachte Dienstleistung S1 des Dienstes S dem externen Gerät 30 zur Verfügung zu stellen. Damit das Mehrkernprozessorsytem 10 unter Zuhilfenahme des Programmspeichers 2 mit seinem Steuerungsprogramm 20 die industrielle Anlage steuern kann, steht dem Automatisierungsgerät 1 ein Betriebssystem Besy zur Verfügung. Damit der Dienst S seine Dienstleistung S1 erbringen kann, wurde in dem Programmspeicher 2 Platz geschaffen für ein Gast-Betriebssystem OS.

Das Zuweisungsmittel 5 ist dabei derart ausgestaltet, eine abstrahierende Schicht zwischen der vorhandenen Hardware H mit einem bereits installierten Betriebssystem Besy und einem dem weiteren für den Dienst S zu installierenden Gast-Betriebssystem OS zu bilden. Es ist damit ein Ursprungsbereich UB für die Steuerung der Anlage und ein isolierter Bereich SB für die Bereitstellung des zusätzlichen Dienstes S geschaffen.

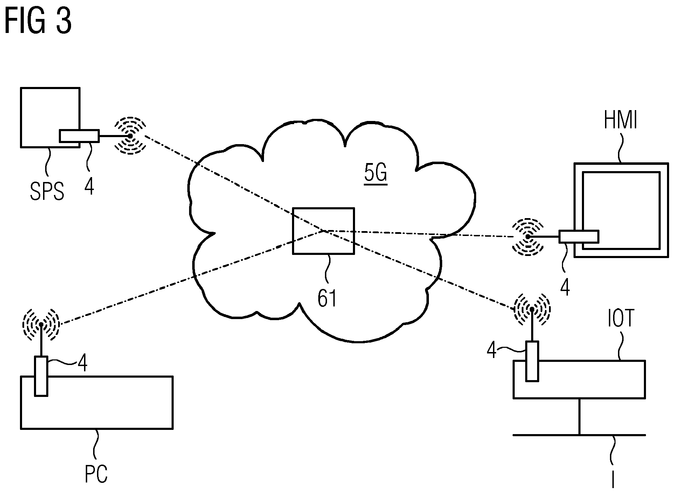

Mit der FIG 3 sind diverse Automatisierungsmodule, nämlich eine speicherprogrammierbare Steuerung SPS, ein MehrzweckComputer PC, ein Bedien- und Beobachtungsgerät HMI und ein Edge Device IoT zur Kopplung von Geräten an das Internet I dargestellt. All die erwähnten Automatisierungsgeräte weisen nun vorteilhafter Weise ein Funkmodul 4 auf und können über ein öffentliches Funknetz 5G problemlos und ohne Kabelaufwand miteinander kommunizieren.

## Patentansprüche

1. Automatisierungsgerät (1) für die industrielle Automatisierung umfassend
ein Mehrkernprozessorsystem (10) mit mehreren Rechenkernen (11,...,18),
einen Programmspeicher (2),
eine Kommunikationsschnittstelle (3), welche auf einer ersten Seite (3a) ausgestaltet ist, eine lösbare Verbindung mit einem Funkmodul (4) einzugehen und auf einer zweiten Seite (3b) mit einem Zuweisungsmittel (5) in Verbindung steht, wobei das Mehrkernprozessorsystem (10) und der Programmspeicher (2) ausgestaltet sind, mit einem ersten Anteil (C1) an Rechenkernen (11,...,14) und einem Steuerungsprogramm (20) eine industrielle Anlage zu steuern,
**dadurch gekennzeichnet, dass**
das Zuweisungsmittel (5) ausgestaltet ist, eine Dienstanfrage (R) von einem externen Gerät (30) zu verwalten, wobei die Dienstanfrage über das Funkmodul (4) an das Zuweisungsmittel (5) gestellt wird, weiterhin ist das Zuweisungsmittel (5) ausgestaltet, einem Dienst (S) der Dienstanfrage (R) einen isolierten Bereich (SB) bereitzustellen, innerhalb dessen jegliche Aktionen des Dienstes (S) keine Auswirkung auf die Abläufe in dem Steuerungsprogramm (20) hat, wobei der isolierte Bereich (SB) einen zweiten Anteil (C2) an Rechenkernen (15,...,18) umfasst, weiterhin ist das Zuweisungsmittel (5) ausgestaltet, eine Kommunikationsverbindung (31) zu dem externen Gerät (30) aufrecht zu halten und eine in dem zweiten Anteil (C2) von Rechenkernen (15,...,18) erbrachte Dienstleistung (S1) des Dienstes (S) dem externen Gerät (30) zur Verfügung zu stellen.

2. Automatisierungsgerät (1) nach Anspruch 1, wobei das Zuweisungsmittel (5) weiterhin ausgestaltet ist, eine abstrahierende Schicht zwischen der vorhandenen Hardware (H) mit einem bereits installiertem Betriebssystem (Besy) und einem weiteren für den Dienst (S) zu installierendes Gast-Betriebssystem (OS) zu bilden.

3. Automatisierungsgerät (1) nach Anspruch 1 oder 2, wobei die Kommunikationsschnittstelle (3) als eine USB Schnittstelle ausgestaltet ist, welche allen Umständen mechanischer Belastungen und EMV-Anforderungen im industriellen Umfeld standhält.

4. Automatisierungsgerät (1) nach Anspruch 3, aufweisend einen Einsteck-Schacht (40), in welchen das Funkmodul (4) eingesteckt wird, wobei der Einsteck-Schacht (40) eine Öffnung (41) und einen Bodenbereich (42) aufweist, wobei die Öffnung (41) mit einem Dichtungselement (43) versehen ist, welche bei eingestecktem Funkmodul (4) den Einsteck-Schacht (40) abdichtet und der Bodenbereich (42) eine USB-Buchse (44) aufweist.

5. Automatisierungsgerät (1) nach Anspruch 4, aufweisend ein Fixierungselement (50), welches das Funkmodul (4) in dem Einsteck-Schacht (40) fixiert.

6. Automatisierungsgerät (1) nach einem der Ansprüche 1 bis 5, ausgestaltet als
ein HMI-Gerät (HMI),
eine speicherprogrammierbare Steuerung (SPS),
ein dezentrales Peripheriesystem oder
ein Mehrzweckcomputer (PC) mit einer installierten SPS-Software.

7. Automatisierungsgerät (1) nach einem der Ansprüche 1 bis 6, aufweisend ein Authentifizierungsmittel (51), welches ausgestaltet ist, nach einem Verbinden mit dem Funkmodul (4) eine Authentifizierung des Funkmoduls (4) vorzunehmen und erst dann für einen Betrieb freizuschalten, wenn die Authentifizierung positiv war.
